# EUROPÄISCHE PATENTSCHRIFT

(11) **EP 1 339 158 B1**
(45) Veröffentlichungstag und Bekanntmachung des Hinweises auf die Patenterteilung: **02.10.2013**
(21) Anmeldenummer: 03003468.0
(22) Anmeldetag: 15.02.2003
(51) Int. Cl.: H02K 1/14, H02K 3/52

(54) **Reihenschlussmotor**
Series motor
Moteur série

(30) Priorität: 26.02.2002 DE 10209010
(43) Veröffentlichungstag der Anmeldung: 27.08.2003
(73) Patentinhaber: C. & E. Fein GmbH, 73529 Schwäbisch-Gmünd-Bargau (DE)
(72) Erfinder: Meyer, Christoph, 70599 Stuttgart (DE); Schreiber, Alfred, 73230 Kirchheim (DE)
(74) Vertreter: Gahlert, Stefan

(56) Entgegenhaltungen:
- EP-A- 0 730 334
- EP-A- 0 913 909
- EP-A- 1 128 542
- DE-A1- 4 038 028
- DE-A1- 19 700 074

## Beschreibung

Die Erfindung betrifft einen Reihenschlussmotor, insbesondere einen Universalmotor für ein Elektrowerkzeug, mit einem Anker, der eine kommutierende Ankerwicklung aufweist, mit einem Stator, der ein magnetisch geschlossenes Joch bildet und in dem der Anker drehbar aufgenommen ist, mit wenigstens zwei Feldpolen, die auf dem Stator aufgenommen sind, wobei jeder Feldpol zwei Polhörner aufweist, die durch axiale Kanten in Umfangsrichtung abgeschlossen sind.

Ein derartiger Reihenschlussmotor ist aus der EP 1 128 542 A1 bekannt.

Es handelt sich hierbei um einen gebremsten Reihenschlussmotor mit Vorzugsrichtung, der insbesondere als Universalmotor für ein Elektrowerkzeug geeignet ist. Der Motor weist einen Ständer mit mindestens zwei Feldpolen auf, von denen jeder ein Polhorn mit einer auflaufenden Kante und ein Polhorn mit einer ablaufenden Kante besitzt. Die Polhörner mit ablaufender Kante sind gegenüber den Polhörnern mit auflaufender Kante in Umfangsrichtung gesehen verkürzt oder weisen mindestens eine sich in Umfangsrichtung erstreckende Aussparung auf. Der Motor lässt sich zwischen Motor- und Bremsbetrieb umschalten, wobei ein verstärktes Bürstenfeuer ohne Wendepolspulen oder andere Zusatzspulen vermieden werden soll. Hierbei sind ferner vorzugsweise die Bürsten entgegen der Drehrichtung des Ankers aus der neutralen Zone verdreht angeordnet.

Die Offenbarung der vorstehend genannten Druckschrift ist jedoch auf einen gebremsten Elektromotor beschränkt und befasst sich im wesentlichen mit einer Verminderung des Bürstenfeuers bei solchen Motoren.

Ganz allgemein besteht jedoch bei Reihenschlussmotoren, die insbesondere als Universalmotoren in Elektrowerkzeugen eingesetzt werden, nicht nur das Bedürfnis, das Bürstenfeuer so gering wie möglich zu halten, sondern es wird eine möglichst hohe Leistungsdichte angestrebt, d.h. eine möglichst hohe Leistung bei möglichst geringer Baugröße.

In diesem Zusammenhang vermag die vorgenannte Druckschrift dem Fachmann keinerlei Hinweise zu liefern, wie die Leistungsdichte des Motors erhöht werden kann.

Die Aufgabe der Erfindung besteht somit darin, einen verbesserten Reihenschlussmotor zu schaffen, der insbesondere als Universalmotor für ein Elektrowerkzeug einsetzbar ist und eine möglichst hohe Leistung bei gegebener Baugröße aufweist.

Diese Aufgabe wird bei einem Reihenschlussmotor gemäß der eingangs genannten Art dadurch gelöst, dass jedes Polhorn wenigstens zwei über die axialen Kanten hinaus vorstehende Vorsprünge aufweist, dass Mittel zur Umschaltung der Drehrichtung des Ankers vorgesehen sind und dass der Motor einen Polüberdeckungswinkel von 105° bis 110° aufweist.

Die Aufgabe der Erfindung wird auf diese Weise vollkommen gelöst.

Es wurde nämlich erkannt, dass auf diese Weise eine verbesserte Leistung erzielt werden kann. Durch den kleineren Polüberdeckungswinkel ergibt sich eine Verkleinerung der Polflächen. An jedem der beiden Polhörner eines Feldpols ergibt sich eine Leistungserhöhung und gleichzeitig eine Verringerung des Bürstenfeuers.

Durch die von jedem Polhorn etwa in Umfangsrichtung hervorstehenden Vorsprünge wird es ermöglicht, ein insgesamt größeres Wicklungspaket auf die Feldpole aufzubringen, ohne dass sich die Außenabmessungen des Motors hierdurch erhöhen. Dies ist insbesondere im Zusammenhang mit Formspulen von Bedeutung, die nicht automatisch gewickelt werden und statt dessen als vorgefertigte Wicklungspakete, die im allgemeinen bandagiert sind, auf die Feldpole aufgebracht werden und dabei mit ihren Längsabschnitten in die axial verlaufenden Nuten zwischen den Polhörnern und dem Joch eingelegt werden.

Während bei dem aus der eingangs genannten EP 1 128 542 A1 bekannten Motor dies nicht möglich war, da nur auf der ablaufenden Seite zwei derartige Vorsprünge vorgesehen waren, während auf der auflaufenden Seite herkömmliche Feldpole ohne irgendwelche Aussparungen oder Vorsprünge verwendet wurden, wird es durch die gegenwärtige Erfindung ermöglicht, mehr Kupfer im vorgegebenen Raum unterzubringen. Es können also insbesondere breitere Wicklungspakete verwendet werden, da diese durch die nach außen hin vorstehenden Vorsprünge auf beiden Seiten in den axialen Nuten sicher gehalten werden. Dabei wird gleichzeitig durch die Vorsprünge an jedem Polhorn sichergestellt, dass auch größere Wicklungspakete nicht nach innen hin in den Freiraum hervorstehen können, der naturgemäß für den Anker freigehalten werden muss.

Insgesamt wird es auf diese Weise ermöglicht, bei gleichbleibender Baugröße eine erhöhte Leistung des Motors zu erzielen. Darüber hinaus ergibt sich zusätzlich eine Verringerung des Bürstenfeuers.

Es ist zwar aus der EP 0 913 909 A1 grundsätzlich bekannt, bei einem Reluktanzmotor für einen Kompressorantrieb die Polhörner mit über die axialen Kanten hinaus vorstehenden Vorsprüngen zu versehen, um die Montage zu vereinfachen und die Baudichte zu verbessern. Jedoch ist die Erfindung hierdurch nicht nahegelegt, da es sich hierbei um einen ungebremsten Motor mit Vorzugsrichtung handelt.

Eine Übertragung dieser Lehre auf einen Motor gemäß der vorstehend genannten Art erscheint nicht naheliegend, da bei umschaltbaren Motoren gänzlich andere Verhältnisse vorliegen als bei ungebremsten Motoren mit einer Laufrichtung. Außerdem handelt es sich bei dem bekannten Motor um einen Reluktanzmotor, was sich wesentlich von einem Reihenschlussmotor unterscheidet.

In vorteilhafter Weiterbildung der Erfindung weist jedes Polhorn mindestens einen weiteren Vorsprung auf, der über die axiale Kante des Polhorns hinaus vorsteht.

Auf diese Weise lässt sich durch die zusätzlichen Vorsprünge auch im mittleren Bereich der Längsabschnitte eines Wicklungspaketes eine sichere Fixierung gewährleisten.

Vorzugsweise ist zumindest an einem jeden axialen Ende eines Polhorns ein Vorsprung vorgesehen, wodurch das eingelegte Wicklungspaket insbesondere an den wichtigen Endabschnitten sicher fixiert werden kann.

In vorteilhafter Weiterbildung der Erfindung ist der Stator in an sich bekannter Weise aus Stanzblechen zusammengesetzt, wobei die Vorsprünge erfindungsgemäß an den Polhörnern beim Stanzvorgang hergestellt sind. Hierbei können die Vorsprünge aus einer oder mehreren Lagen von Stanzblechen zusammengesetzt sein.

Auf diese Weise ist eine einfache und kostengünstige Herstellung des Stators gewährleistet, ohne dass Mehrkosten gegenüber der Herstellung von herkömmlichen Reihenschlussmotoren entstehen.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine perspektivische Darstellung eines Stators gemäß der Erfindung, der zum Zwecke der einfacheren Darstellung in zwei Hälften geschnitten ist;
- Fig. 2: eine ebene Projektion des Feldpoles gemäß Fig. 1, von der Innenseite aus gesehen und
- Fig. 3: ein vereinfachtes Schaltbild eines erfindungsgemäßen Motors mit einem Stator gemäß Fig. 1, bei dem die Drehrichtung umschaltbar ist.

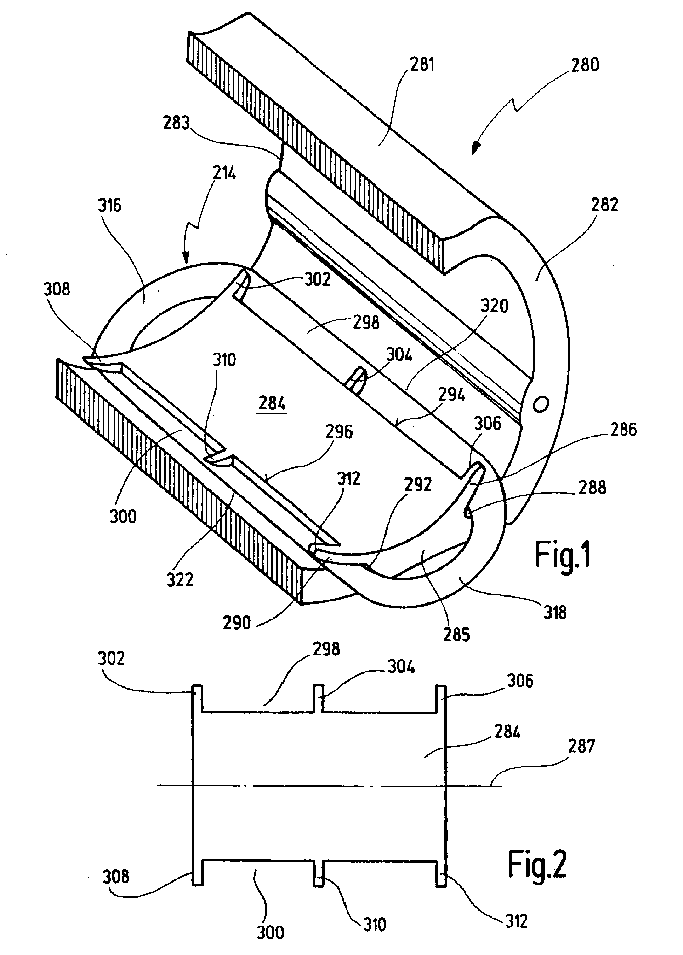

In Fig. 1 ist ein Stator für einen erfindungsgemäßen Reihenschlussmotor dargestellt und insgesamt mit der Ziffer 280 bezeichnet.

Zum Zwecke der einfacheren Darstellung ist der Stator 280 in zwei Hälften geschnitten. Er kann auch aus zwei Hälften zusammengesetzt sein, wie aus der DE 195 07 264 A1 bekannt ist. Danach wird die Montage der Wicklungspakete auf dem Stator vereinfacht, da erst nach der Montage der Wicklungspakete die beiden Hälften miteinander verbunden werden, indem Stifte in vorgesehene axiale Öffnungen eingeführt werden und anschließend das so entstandene magnetisch geschlossene Joch 281 durch Stauchen der Stifte fixiert wird.

Unabhängig davon, ob der Stator 280 aus zwei axialen Hälften zusammengesetzt ist oder einteilig ausgebildet ist, bildet der Stator 280 das geschlossene Joch 281 und weist zwei Feldpole auf, an denen Feldwicklungen eingepasst sind. In Fig. 1 ist nur ein Feldpol 284 und die zugehörige Feldspule 214 zu erkennen. Der Feldpol 284 weist einen zentralen Abschnitt 285 auf, der ein Teil des geschlossenen Joches 281 ist. Von dem zentralen Abschnitt 285 aus erstrecken sich zwei Polhörner 286, 290 zu den Seiten hin etwa in Umfangsrichtung. Dabei definieren sie axiale Nuten 288 bzw. 292 zwischen den Polhörnern 286, 290 und dem geschlossenen Joch 281.

Die Feldspule 214 ist als eine Formspule ausgeführt, die extern gewickelt wird und in der Regel durch Umwicklung mit einem geeigneten Band zu einem festen Wicklungspaket zusammengefügt wird, das anschließend auf dem Stator montiert werden kann. Die Feldspule 214 weist zwei axiale Enden 316, 318 und zwei Längsabschnitte 320, 322 auf, die sich dazwischen erstrecken. Die Feldspule 214 wird am Stator 280 befestigt, indem die Längsabschnitte 320, 322 in die axialen Nuten 288, 292 eingeführt werden. Dabei werden die Längsabschnitte 320, 322, wie im Stand der Technik bekannt, üblicherweise mit einem geeigneten Isolierpapier eingeschlagen (nicht dargestellt). Die axialen Enden 316, 318 stehen dann über die axialen Enden 282, 283 des Stators 280 hervor und sind um die Statorenden herum gemäß Fig. 1 nach unten gebogen.

Erfindungsgemäß sind an jeder axialen Kante 294, 296, in der das betreffende Polhorn 286, 290 in Umfangsrichtung endet, drei Vorsprünge 302, 304, 306 bzw. 308, 310, 312 vorgesehen. Diese Vorsprünge 302, 304, 306, 308, 310, 312 sind wie Zungen ausgebildet, die sich von den betreffenden axialen Kanten 294 bzw. 296 etwa in Umfangsrichtung erstrecken. Jedes Polhorn 286, 290 weist zwei Vorsprünge 302, 306 bzw. 308, 312 auf, die an den axialen Enden 282, 283 des Stators 280 ausgebildet sind. Ferner ist jeweils in der Mitte zwischen den endseitigen Vorsprüngen 302, 306 bzw. 308, 312 jeweils ein weiterer Vorsprung 304 bzw. 310 vorgesehen.

Zwischen den Vorsprüngen 302, 306 bzw. 308, 312 sind Ausschnitte gebildet, die allgemein mit den Bezugsziffern 298 bzw. 300 angedeutet sind.

Wie aus Fig. 1 leicht erkennbar, bewirken die von den axialen Kanten 294 bzw. 296 seitlich hervorstehenden Vorsprünge 302, 304, 306 bzw. 308, 310, 312, dass die Feldspulen 214 sicher in den axialen Nuten 288, 292 fixiert werden. Dabei steht gleichzeitig ein relativ großes Volumen für das Wicklungspaket zur Verfügung, das in den axialen Nuten 288 bzw. 292 aufgenommen werden kann, ohne dass dieses nach innen in den Freiraum in radialer Richtung vorsteht, der naturgemäß für den rotierenden Anker freigehalten werden muss.

Wie aus Fig. 1 zu ersehen ist, können hierbei die Längsabschnitte 320 bzw. 322 des Wicklungspaketes über die axialen Kanten 294 bzw. 296 der Polhörner 286 bzw. 290 seitlich hinaus vorstehen und werden dabei von den Vorsprüngen 302 bis 312 sicher fixiert. Dabei müssen sich die Vorsprünge 302 bis 312 nicht über die gesamte Breite des Wicklungspaketes erstrecken, sondern nur in einem ausreichenden Maße vorstehen, um eine sichere Fixierung des Wicklungspaketes zu gewährleisten.

Durch die zwischen den Vorsprüngen 302 bis 312 gebildeten Ausschnitte 298 bzw. 300 wird die magnetisch wirksame Polfläche des Feldpols 284 in beiden Umfangsrichtungen verkürzt.

Es ergibt sich so eine kleinere Polüberdeckung mit einem Winkel von etwa 105 bis 110°. Dies ist besonders günstig für Motoren, die zwischen Rechtslauf und Linkslauf umschaltbar sind oder für Motoren mit Vorzugsrichtung, die mit einer Bremseinrichtung ausgestattet sind. Im Gegensatz dazu weisen herkömmliche Maschinen mit Vorzugsrichtung im allgemeinen größere Polüberdeckungen im Bereich von etwa 120 bis 125° auf.

Wie aus der Projektion gemäß Fig. 2 ersichtlich ist, ist der Feldpol 284 symmetrisch ausgebildet, so dass sich die beiden Polhörner 286 bzw. 290 von einer Symmetrielinie 287 aus nach beiden Seiten hin symmetrisch erstrecken.

Der Stator 280 ist, wie bei Universalmotoren üblich, aus Stanzblechen hergestellt, die paketiert werden und so zu einem geschlossenen Statorpaket in Form des geschlossenen Joches 281 zusammengesetzt werden. Dabei ist es möglich, die Vorsprünge 302, 304, 306, 308, 310, 312 bei der Herstellung der Einzelbleche durch Stanzen zugleich mit herzustellen. Die Vorsprünge 302, 304, 306, 308, 310, 312 sind somit vorteilhafterweise aus einer einzelnen oder aus mehreren Lagen von Stanzblechen gebildet und bestehen beispielsweise aus zwei Stanzblechlagen.

Auf diese Weise kann die Herstellung der Vorsprünge ohne zusätzlichen Aufwand gegenüber der Herstellung eines herkömmlichen Stators erreicht werden.

Da insgesamt mehr Kupfer bei kleinerer Polüberdeckung im Stator untergebracht werden kann, ergibt sich eine erhöhte Leistung des Motors gegenüber herkömmlichen Motoren und gleichzeitig ein verringertes Bürstenfeuer, was sich insbesondere bei umschaltbaren Motoren mit Rechts/Linkslauf und bei gebremsten Motoren bemerkbar macht.

Der Stator 280 kann zwar grundsätzlich bei Reihenschlussmotoren (Universalmotoren) mit Vorzugsrichtung verwendet werden, es ist jedoch besonders vorteilhaft, wenn er bei gebremsten Motoren oder bei umschaltbaren Motoren mit Rechts/Linkslauf verwendet wird.

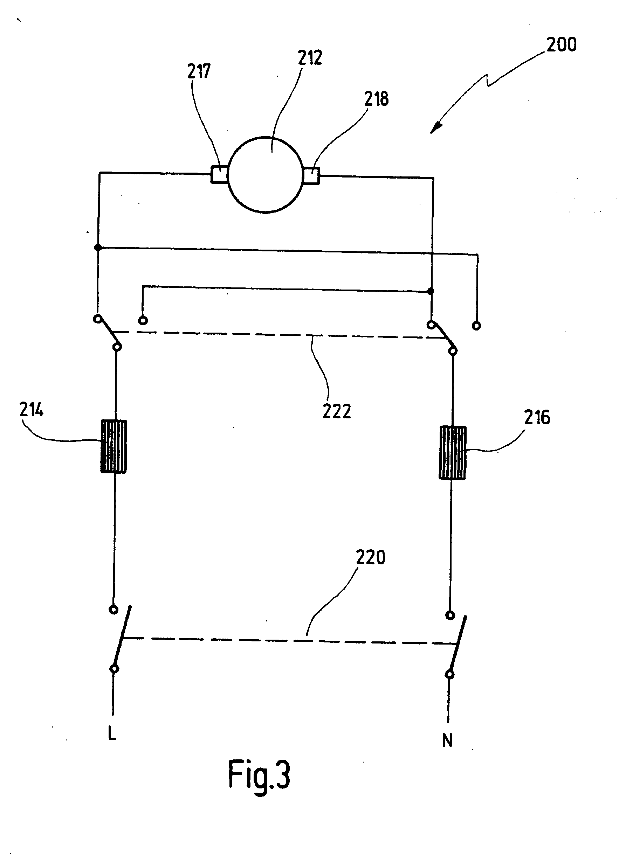

Ein Reihenschlussmotor, der den Stator 280 gemäß Fig. 1 aufweisen kann, und der eine Umschaltung zwischen Rechts/Linkslauf ermöglicht, wird im folgenden anhand von Fig. 3 kurz erläutert, die ein Schaltbild des allgemein mit 200 bezeichneten Motors zeigt. Ein Anker mit einer Ankerwicklung 212 liegt in Reihe über Bürsten 217, 218 und einem zweipoligen Umschalter 222 mit den beiden Feldwicklungen 214, 216 (die Feldwicklungen können auch als eine einzige Feldwicklung angesehen werden, die in zwei Wicklungsteile aufgeteilt ist). Die Feldwicklungen 214, 216 sind über einen Ein/Aus-Schalter 220 mit den beiden Polen einer Spannungsquelle verbunden, die mit N und L bezeichnet sind. Der Schalter 222 ist ein zweipoliger Umschalter, der eine Umschaltung der Stromrichtung durch die Ankerwicklung 212 ermöglicht. Auf diese Weise kann die Drehrichtung des Ankers umgeschaltet werden.

Wie zuvor bereits erwähnt, kann der Stator 280 besonders vorteilhaft auch für einen gebremsten Reihenschlussmotor verwendet werden, wobei hier auf die Beschreibung einer derartigen Schaltung verzichtet wird, da diese grundsätzlich aus der EP 1 128 542 A1 bekannt ist, auf die ausdrücklich verwiesen wird.

## Patentansprüche

1. Reihenschlussmotor, insbesondere Universalmotor für ein Elektrowerkzeug, mit einem Anker, der eine kommutierende Ankerwicklung (212) aufweist, mit einem Stator (280), der ein magnetisch geschlossenes Joch (281) bildet und in dem der Anker drehbar aufgenommen ist, mit wenigstens zwei Feldpolen (284), die auf dem Stator (280) aufgenommen sind, wobei jeder Feldpol (284) zwei Polhörner (286, 290) aufweist, die durch axiale Kanten (294, 296) in Umfangsrichtung abgeschlossen sind, **dadurch gekennzeichnet, dass** jedes Polhorn (286, 290) wenigstens zwei über die axialen Kanten (294, 296) hinaus vorstehende Vorsprünge (302, 304, 306, 308, 310, 312) aufweist, dass Mittel (222) zur Umschaltung der Drehrichtung des Ankers vorgesehen sind, und dass der Motor einen Polüberdeckungswinkel von 105° bis 110° aufweist.

2. Reihenschlussmotor nach Anspruch 1, **dadurch gekennzeichnet, dass** sich die Polhörner (286, 290) jeweils von einem mittleren Abschnitt (285) aus, der Teil des Joches (281) ist, nach außen etwa in Umfangsrichtung unter Bildung von axial verlaufenden Nuten (288, 292) zur Wicklungsaufnahme erstrecken, und dass jeder Feldpol (284) eine Feldspule (214, 216) aufweist, die Längsabschnitte (320, 322) aufweist, die in die Nuten (288, 292) eingelegt und durch die Vorsprünge (302, 304, 306, 308, 310, 312) zumindest teilweise gehalten sind.

3. Reihenschlussmotor nach Anspruch 1, **dadurch gekennzeichnet, dass** die Feldspulen (214, 216) als Formspulen ausgebildet sind, die mit ihren Längsabschnitten (320, 322) in die Nuten (288, 292) eingelegt sind und mit axialen Endabschnitten (316, 318) über die axialen Enden (282, 283) des Stators (280) hinaus vorstehen.

4. Reihenschlussmotor nach einem der vorhergehenden Ansprüche, **dadurch gekennzeichnet, dass** jedes Polhorn (286, 290) mindestens einen weiteren Vorsprung (304, 310) aufweist, der über die axiale Kante (294, 296) hinaus vorsteht.

5. Reihenschlussmotor nach einem der vorhergehenden Ansprüche, **dadurch gekennzeichnet, dass** jedes Polhorn (286, 290) an seinen axialen Enden jeweils einen Vorsprung (302, 306, 308, 312) aufweist.

6. Reihenschlussmotor nach einem der vorhergehenden Ansprüche, **dadurch gekennzeichnet, dass** der Stator (280) aus Stanzblechen zusammengesetzt ist und dass die Vorsprünge (302, 304, 306, 308, 310, 312) an den Polhörnern (286, 290) beim Stanzvorgang hergestellt sind.

7. Reihenschlussmotor nach Anspruch 6, **dadurch gekennzeichnet, dass** die Vorsprünge (302, 304, 306, 308, 310, 312) aus einer oder mehreren Lagen von Stanzblechen zusammengesetzt sind.

## Claims

1. Series-wound motor, in particular universal motor for a power tool, having an armature which has a commutating armature winding (212), having a stator (280) which forms a magnetically closed yoke (281) and in which the armature is accommodated such that it can rotate, having at least two field poles (284) which are accommodated on the stator (280), wherein each field pole (284) has two pole horns (286, 290) which are terminated in the circumferential direction by axial edges (294, 296), **characterized in that** each pole horn (286, 290) has at least two projections (302, 304, 306, 308, 310, 312) which project beyond the axial edges (294, 296), **in that** means (222) for changing over the direction of rotation of the armature are provided, and **in that** the motor has a pole overlap angle of 105° to 110°.

2. Series-wound motor according to Claim 1, **characterized in that** the pole horns (286, 290) each extend, from a central section (285) which is part of the yoke (281), outward approximately in the circumferential direction so as to form axially running slots (288, 292) for accommodating a winding, and **in that** each field pole (284) has a field coil (214, 216) which has longitudinal sections (320, 322) which are inserted into the slots (288, 292) and are at least partially held by the projections (302, 304, 306, 308, 310, 312).

3. Series-wound motor according to Claim 1, **characterized in that** the field coils (214, 216) are in the form of preformed coils which are inserted into the slots (288, 292) by way of their longitudinal sections (320, 322) and project beyond the axial ends (282, 283) of the stator (280) by way of axial end sections (316, 318).

4. Series-wound motor according to one of the preceding claims, **characterized in that** each pole horn (286, 290) has at least one further projection (304, 310) which projects beyond the axial edge (294, 296).

5. Series-wound motor according to one of the preceding claims, **characterized in that** each pole horn (286, 290) has in each case one projection (302, 306, 308, 312) at its axial ends.

6. Series-wound motor according to one of the preceding claims, **characterized in that** the stator (280) is made up of stamped metal sheets, and **in that** the projections (302, 304, 306, 308, 310, 312) on the pole horns (286, 290) are produced during the stamping process.

7. Series-wound motor according to Claim 6, **characterized in that** the projections (302, 304, 306, 308, 310, 312) are made up of one or more layers of stamped metal sheets.

## Revendications

1. Moteur série, notamment moteur universel pour un outil électrique, doté d'une ancre comportant un bobinage d'ancre (212) pouvant être commuté, d'un stator (280) formant un joug (281) fermé de façon magnétique et dans lequel l'ancre est logée de façon à pouvoir tourner, d'au moins deux pôles de champ (284) logés sur le stator (280), chaque pôle de champ (284) comportant deux cornes polaires (286, 290) se terminant par des arêtes axiales (294, 296) dans la direction périphérique, **caractérisé en ce que** chaque corne polaire (286, 290) comporte au moins deux saillies (302, 304, 306, 308, 310, 312) saillant vers l'extérieur au-delà des arêtes axiales (294, 296), que des moyens (222) de commutation de la direction de rotation de l'ancre sont prévus et que le moteur présente un angle de recouvrement de pôle allant de 105° à 110°.

2. Moteur série selon la revendication 1, **caractérisé en ce que** les cornes polaires (286, 290) s'étendent respectivement à partir d'une section centrale (285) faisant partie du joug (281), s'étendent vers l'extérieur approximativement dans la direction périphérique en formant des rainures (288, 292) s'étendant dans le plan axial permettant de loger le bobinage et que chaque pôle de champ (284) comporte une bobine de champ (214, 216) comportant des sections longitudinales (320, 322) placées dans les rainures (288, 292) et maintenues au moins en partie par les saillies (302, 304, 306, 308, 310, 312).

3. Moteur série selon la revendication 1, **caractérisé en ce que** les bobines de champ (214, 216) prennent la forme de bobines moulées placées dans les rainures (288, 292) avec leurs sections longitudinales (320, 322) et saillant vers l'extérieur au-delà des extrémités axiales (282, 283) du stator (280) avec leurs sections d'extrémité axiale (316, 318).

4. Moteur série selon l'une quelconque des revendications précédentes, **caractérisé en ce que** chaque corne polaire (286, 290) comporte au moins une saillie (304, 310) supplémentaire saillant vers l'extérieur au-delà de l'arête axiale (294, 296).

5. Moteur série selon l'une quelconque des revendications précédentes, **caractérisé en ce que** chaque corne polaire (286, 290) comporte respectivement une saillie (302, 306, 308, 312) au niveau de ses extrémités axiales.

6. Moteur série selon l'une quelconque des revendications précédentes, **caractérisé en ce que** le stator (280) se compose de matrices de découpage et que les saillies (302, 304, 306, 308, 310, 312) sont fabriquées au niveau des cornes polaires (286, 290) lors du processus de découpage.

7. Moteur série selon la revendication 6, **caractérisé en ce que** les saillies (302, 304, 306, 308, 310, 312) se composent d'une ou de plusieurs couches de matrices de découpage.
